# EUROPÄISCHE PATENTSCHRIFT

(11) **EP 3 165 978 B1**
(45) Veröffentlichungstag und Bekanntmachung des Hinweises auf die Patenterteilung: **14.07.2021**
(21) Anmeldenummer: 16194798.1
(22) Anmeldetag: 20.10.2016
(51) Int. Cl.: B25J 9/16, G05B 19/408

(54) **VERFAHREN ZUR ERSTINBETRIEBNAHME EINER ANLAGE**
PROCEDURE FOR INITIAL START-UP OF A PLANT
PROCÉDÉ POUR LA PREMIÈRE MISE EN SERVICE D'UNE INSTALLATION

(30) Priorität: 21.10.2015 DE 202015105595 U
(43) Veröffentlichungstag der Anmeldung: 10.05.2017
(73) Patentinhaber: FFT Produktionssysteme GmbH & Co. KG, 36041 Fulda (DE)
(72) Erfinder: Schönberg, Alexander, 36039 Fulda (DE)
(74) Vertreter: SSM Sandmair

(56) Entgegenhaltungen:
- EP-A1- 1 533 671
- EP-A1- 2 617 534
- EP-A2- 2 333 626
- DE-A1-102006 041 886
- US-A1- 2014 114 477
- US-A1- 2015 224 649

## Beschreibung

Die Erfindung betrifft ein Verfahren zur Erstinbetriebnahme einer Anlage, mit der ein absolutes robotergestütztes Positionsverfahren durchgeführt werden kann. Ferner betrifft die Erfindung eine Anlage zur Durchführung des Verfahrens. Das Verfahren optimiert eine Montageaufgabe, die an einem Computerarbeitsplatz theoretisch erstellt wurde und durch die Anlage in der Realität umgesetzt wird. Die Anlage umfasst wenigstens einen Roboter, wenigstens ein Messsystem und einen Rechner, wobei das wenigstens eine Messsystem den wenigstens einen Roboter während der Ausführung der Montageaufgabe überwacht und der Roboter und das Messsystem über den Rechner miteinander verbunden sind.

Verfahren zum Trainieren von Robotern für eine vorgegebene Montageaufgabe sind bereits aus dem allgemeinen Stand der Technik bekannt. Eine bekannte Methode ist die so genannte Teach-in-Methode, bei der der Roboter respektive der Roboterarm mittels einer Steuerkonsole zu gewünschten Positionen einer Bewegungsbahn, welcher der Roboter während der Montageaufgabe abfahren muss, bewegt wird. Die so angesteuerten Punkte, respektive deren Koordinaten, werden in der Robotersteuerung erfasst. So wird jeder einzelne Arbeitschritt zur Bewältigung der Montageaufgabe abgearbeitet. Aus der Gesamtheit der Arbeitschritte wird ein Programm erstellt, mit dem der Roboter autonom die vorgegebene Montageaufgabe automatisch durchführen kann. Treten Fehler während der Montage auf oder werden Teile der Montageaufgabe geändert, müssen neue Bewegungsabläufe dem Roboter wieder über die Steuerkonsole gelehrt werden.

Die Inbetriebnahme komplexer Montageanlagen gestaltet sich heute weitgehend manuell. In der Design-Phase werden in einer virtuellen Umgebung Montageprozesse geplant, welche für die realen Prozesse in einer zeitaufwändigen Prozedur an den beteiligten Robotern angepasst werden. Diese Anpassung kompensiert die Abweichungen der Roboter und verhindert eine rückführende Dokumentation und Separierung der Abweichungseinflüsse. Folglich muss im Fall eines Austausches oder einer Optimierung der Anlage ein neuer Anpassungsprozess durchgeführt werden. Aus der DE 10 2012 009 010 A1 ist ein Verfahren zum Erzeugen einer Bewegung eines Roboters bekannt. Bei dem Verfahren wird ein Erfassungselement von Hand an vorgegebene Positionen der vorgesehenen Bewegungsbahn des Roboters bewegt. Die Positionen des Erfassungselements werden bezogen auf ein vorgebbares Koordinatensystem erfasst, und anhand der so gewonnenen Referenzpunkte wird eine Bewegungsbahn für den Roboter ermittelt. Weiterhin wird mittels eines Erfassungselements eine vom Roboter auszuübende Kraft und/oder ein vom Roboter auszuübendes Drehmoment an wenigstens einer Position erfasst, und einem dieser Position zugeordneten Referenzpunkt im Koordinatensystem zugeordnet.

Die US 2015/0224649 A1 betrifft ein Robotersystem mit einer an dem Roboter angeordneten Messeinrichtung, mit der der Roboter ein Ziel identifizieren kann. Die EP 2 333 626 A2 betrifft ein Verfahren, mit dem zwei Bauteile von Robotern nach dem BestFit Verfahren zusammengeführt werden können, um in der zusammengeführten Position miteinander verbunden zu werden. Aus der EP 1 533 671 A1 ist ein Verfahren zum Erfassen einer Werkstückposition mit einer mit einem Roboter verbundenen Messeinrichtung bekannt. Die DE 10 2006 041 886 betrifft ein Verfahren zur Positionierung von Werkstücken sowie ein entsprechendes Positioniersystem.

Da den bekannten Verfahren gemeinsam ist, dass sie bei einer Erstinbetriebnahme einer Anlage einen relativ zeitaufwändigen Programmerstellungsprozess haben, was sich negativ auf die Montagekosten auswirkt, besteht Bedarf an einem Verfahren und einer Anlage, welches bzw. welche in der Lage ist, eine theoretisch erarbeitete Montageaufgabe direkt in der Anlage umzusetzen.

Diese Aufgabe wird durch das Verfahren gemäß Anspruch 1 und die Anlage gemäß Anspruch 8 erfüllt. Die abhängigen Ansprüche betreffen Merkmale, die das Verfahren des Anspruchs 1 beziehungsweise die Anlage des Anspruchs 8 vorteilhaft weiterbilden.

Ein Aspekt der Erfindung betrifft eine Anlage zur Durchführung des erfindungsgemäßen absoluten robotergestützten Positionsverfahrens zum Optimieren einer durch theoretisch definierte Arbeitsschritte definierten realen Montageaufgabe, wobei mit dem Verfahren die Anlage erstmals in Betrieb genommen werden kann. Die Anlage umfasst wenigstens einen, bevorzugt zwei miteinander kollaborierende Roboter, der die Montageaufgabe durchführt, wenigstens ein Messsystem, das die Parameter, wie beispielsweise Bewegungsrichtung, Bewegungsgeschwindigkeit, ausgeübte Kraft, ausgeübtes Drehmoment, etc., des Roboters überwacht, und wenigstens einen Rechner.

Die Montageaufgabe kann beispielsweise das Zusammenfügen von großvolumigen Bauteilen betreffen, insbesondere die Verbindung von großflächigen, nachgiebigen Strukturen mit entsprechenden Versteifungskörpern, um der Struktur Festigkeit und Formtreue auch unter extremen Belastungen im Normalbetrieb zu geben. Insbesondere kann es sich bei dem großvolumigen Bauteil um einen Flugzeugrumpf handeln, bei der großflächigen, nachgiebigen Struktur um einen Teil der Außenhaut des Flugzeugs und bei den Versteifungskörpern um die entsprechenden Spante oder Stringer. Dabei kann das absolut genaue Auflegen und Verbinden der Spante auf die Flugzeughaut mit der Anlage vorteilhafterweise vollständig automatisch erfolgen, das heißt, ohne dass der Mensch eingreifen muss.

Bei dem Roboter oder den Robotern kann es sich um bekannte Industrieroboter mit zum Beispiel sechs Freiheitsgraden handeln. Das Messsystem kann ein aus dem Stand der Technik bekanntes Messsystem sein oder mehrere bekannte Messsysteme miteinander kombinieren. Bei mehr als einem Roboter können alle Roboter gleichberechtigt sein, es kann aber auch einen oder mehrere Masterroboter und einen oder mehrere Slaveroboter geben. Die Kollaboration von zwei oder mehr Robotern wird durch einen Kommunikationsstandard ermöglicht, der entweder in der Anlage implementiert ist oder über Zusatzprogramme implementiert wird.

Das Programm zur Abarbeitung der Montageaufgabe kann an einem Rechner erstellt werden, der in einem Büro weitab von der Anlage steht und nicht mit der Anlage verbunden ist. Die Programmierung erfolgt in der Regel durch ein Team mit Spezialisten, die Erfahrungen mit Produktionsanlagen und deren Inbetriebnahme haben.

Der Rechner umfasst wenigstens eine Speichereinheit, eine Recheneinheit, eine Übertragungsschnittstelle und eine Kommunikationsschnittstelle, und ist hergerichtet ein Programm, das die theoretisch definierte Montageaufgabe wiedergibt, abzuspeichern. Die Recheneinheit leitet aus dem Programm einzelne Arbeitschritte zum Abarbeiten der Montageaufgabe für den Roboter ab. Bei mehr als einem Roboter können mittels der Recheneinheit mit einem vorgegebenen Algorithmus Unterprogramme abgeleitet werden, wobei jedes Unterprogramm aufeinander abgestimmte Arbeitsschritte für genau einen der Roboter betrifft.

Die einzelnen Arbeitschritte für den Roboter, respektive die Unterprogramme für jeden einzelnen der Roboter, werden über die Übertragungsschnittstelle an die Roboter übertragen. Über die Kommunikationsschnittstelle wird der Roboter respektive werden die Roboter, das Messsystem und die Sensoren überwacht, um die Montageaufgabe abzuarbeiten. Dazu werden die Daten oder Messwerte des Messsystems über die Kommunikationsschnittstelle empfangen und für die Weiterverarbeitung und zum Zweck der Protokollierung, das heißt, für Dokumentationszwecke abgespeichert. Die empfangenen Messdaten werden mit den vorgegebenen Daten des Programms respektive in den Unterprogrammen verglichen. Werden dabei Abweichungen über einem vorgegebenen Grenzwert detektiert, kann durch den Rechner entschieden werden, ob die Montageaufgabe sofort oder zu einem späteren Zeitpunkt abgebrochen oder gestoppt wird.

Der Rechner kann weiterhin dazu hergerichtet sein, aus den detektierten Abweichungen neue Soll-Werte für das Programm respektive die Unterprogramme zu bestimmen und diese in das Programm respektive die Unterprogramme zu integrieren. Die neuen Soll-Werte können dann als Soll-Werte für die nächste gleiche Montageaufgabe dienen. Das heißt, der Rechner kann zum Beispiel Bewegungsparameter des Roboters oder der Roboter in einem oder mehreren Schritten optimieren, ohne dass hierzu der Mensch eingreifen muss.

Der Rechner kann die Daten für jeden Arbeitsschritt des Roboters oder für jeden Arbeitsschritt der Unterprogramme gesondert speichern, so dass später nachvollziehbar ist, welcher Arbeitsschritt im Programm oder Unterprogramm wann und wie modifiziert wurde.

Bei der Erstellung des Programms können am Computer virtuelle Agenten an bestimmten verfahrenskritischen Stellen definiert werden, so dass die Recheneinheit speziell diese Agenten mit den Ergebnissen des Messsystems vergleichen kann.

Bei den Agenten kann es sich um Hilfsmittel zur Erfüllung einer oder mehrerer der Aufgaben, insbesondere Synchronisierungsaufgaben, aus Kalibrierung, Regelung, Überwachung und Prozessteuerung, Dokumentation, Statusverwaltung und Konfiguration handeln. Dabei können reale Agenten zum Einsatz kommen, wie beispielsweise Marker, die von einem oder mehreren der Messsysteme erkannt und erfasst werden können, oder die genannten virtuelle Agenten, die in dem Programm während der Programmierung der theoretischen Montageaufgabe gesetzt werden. Durch die Nutzung der Agenten können Ungenauigkeiten in der Anlage, die aufgrund von nicht exakt bekannten Toleranzketten theoretisch nicht genau genug zu benennen sind, eliminiert werden, um eine absolute robotergestützte Positionierung aller Montageelemente während der Montageaufgabe zu gewährleisten. Solch eine Aufgabe kann beispielsweise die Positionierung und das Verbinden von Spanten an/mit einer Hülle eines Luftfahrzeugs sein, oder jede beliebige Montageaufgabe, zum Beispiel bei der Herstellung von Automobilen, Schienen- oder Wasserfahrzeugen etc., bei der es auf große Genauigkeit der Positionierung von Teilen zueinander ankommt.

Die Kalibrierungsagenten können Koordinatensysteme über Soll- und Ist-Punkte zueinander ausrichten und Verschiebungen, Verdrehungen oder Skalierungen, zum Beispiel in Bezug auf eine Basis, bestimmen. Das Aufnehmen der Ist-Punkte kann bei ungefähr bekannten Positionen der Messsysteme automatisch erfolgen, indem zum Beispiel der Soll-Punkt als Bewegungsbefehl an einen Lasertracker zum Suchen eines Retroreflektors verwendet wird. Über mehrere Reflektoren oder direkt gemessene Positionen und Orientierungen können für eine gleichzeitige Kalibrierung sowohl die Basis als auch das Tool bestimmt werden. Anhand eines Artefaktes können mechanische Arbeitspunkte mit den Werkzeugarbeitspunkten abgeglichen werden. Über Pendelbewegungen können Parameter für Kraft -/Momentensensoren abgeleitet werden.

Die Regelungsagenten können die Regelabweichungen zu programmierten Punkten und zu linear programmierten Bahnen sequentiell zur Programmausführung durchführen. Aufgrund der Bestimmung der Abweichung zur programmierten Bewegung ist auch ohne echtzeitfähige Schnittstellen eine Regelung orthogonal zur Bahnbewegung möglich. Die Bestimmung von Regelabweichungen zur aktuellen Position wird parallel zur Laufzeit des Roboters aufgrund dessen aktueller Position durchgeführt. Diese Bestimmung ermöglicht die Regelung in alle Richtungen auch für dynamische Prozesse und benötigt neben der geometrischen auch eine zeitliche Zuordnung von Soll- und Ist-Werten. Durch die Umrechnung von Kraft-/Momentabweichungen in geometrische Abweichungen über Federsteifigkeiten können auch kraftgesteuerte Prozesse oder Prozesse mit unbekannter Geometrie in einzelne Richtungen geregelt werden.

Die Überwachungs- und Prozesssteuerungsagenten überwachen Prozessparameter und geben Freigaben für weitere Prozessschritte. Wenn Messsysteme nicht messbereit sind, wird die Messbereitschaft wieder hergestellt. Eine Überwachung der Messsysteme stellt die Prozessfähigkeit sicher. Kritische Prozessparameter können in selbstlernenden Algorithmen ausgewertet werden, um bei Ausfall einzelner Komponenten mithilfe einer Trendanalyse bis zur nächsten sicheren Prozessunterbrechung weiter zu produzieren und erst dann eine Reparatur anzustoßen.

Die Dokumentationsagenten dokumentieren den Anlagenzustand, um die Prozesse und das Verhalten der Einzelkomponenten nachvollziehen zu können. Aus den gespeicherten Prozessdaten werden an den Prozessschritten mit Freigabenotwendigkeiten Berichte über die Einhaltung der Prozessvorgaben erstellt und für die Bauteildokumentation und die Anlagenoptimierung aufbereitet.

Statusverwaltungsagenten können die Einzelkomponenten auf ihre Kommunikationsfähigkeit überprüfen, um Abstürze und Ausfälle zu erkennen und Fehlermeldungen zu kommunizieren. Treten kleinere Fehler auf, die Einfluss auf Prozesse haben, diese aber nur kurzfristig und reversibel unterbrechen, werden Warnungen an die betroffenen Komponenten abgesetzt und Verfahren zur schnellstmöglichen Wiederherstellung der Normalprozesse gestartet. Schwerwiegende Fehler führen zu einem Prozessabbruch oder sogar einem Nothalt zur Vermeidung von Schäden an der Anlage oder dem Bauteil. Der Zustand der an der absoluten robotergesteuerten Positionierung beteiligten Komponenten und der Anlagensteuerung wird in einer Zweiwegekommunikation synchronisiert.

Konfigurationsagenten sammeln Anlagenparameter und dokumentieren diese. Somit ist nachvollziehbar, welche Änderungen in den Einzelkomponenten stattgefunden haben, und Einstellungen können mit Prozessergebnissen korreliert werden, um die Prozesse zu optimieren. Bei Bauteil-, Maschinen- und Anlagenänderungen können neue Referenzwerke zur Anpassung der Geometrie eingespielt werden. Zur Kompensation der Einflüsse nachfolgender Prozessschritte werden Vorhaltewerke eingespielt, die auf die Prozesse überlagert werden.

In der Anlage sind zur Überwachung zum Beispiel einer Roboterbewegungen, einer Bewegungsgeschwindigkeit und -richtung des Roboters, einer vom Roboter ausgeübten Kraft oder eines ausgeübten Drehmoments, ein oder mehrere Messsysteme implementiert, die Messungen mittels Rotationstheodoliten, einer Mehrzahl von Kameras zur Beobachtung von Markern, Lasertrackern ohne oder mit Orientierungsempfängern, Laserradar oder andere geeigneten Messmethoden durchführen. Unter Rotationtheodoliten werden hierin Theodoliten verstanden, die in ihrer Lage veränderlich sind, zum Beispiel wie eine Kugel in einer Halterung in eine beliebige Richtung geschwenkt und/oder gedreht werden kann, um zum Beispiel einem realen Agenten auf seinem Weg im dreidimensionalen Raum folgen zu können. Es handelt sich folglich um eine Art "Indoor GPS", mit dem ein Objekt entlang seiner Bewegungskurve verfolgt werden kann, wobei jede Position des Objekts absolut genau erfasst werden kann.

Der oder die Roboter umfasst/umfassen eine oder mehrere Schnittstellen, die in der Anlage implementiert sind. Über diese Schnittstellen können Änderungen von Parametern des Roboters mittels des Rechners oder über ein Eingabegerät von Hand direkt an der Anlage veranlasst werden. Dabei verfügt das Programm bevorzugt über eine Bedieneroberfläche, die so aufgebaut ist, dass Eingaben mit dem Eingabegerät von angelernten Bedienern durchgeführt werden können, das heißt, keine ausgewiesenen Fachleute zur Bedienung der Anlage benötigt werden.

Bei den Schnittstellen kann es sich je nach verwendetem Robotermodell um ein Robot Sensor Interface mit Zugriff auf Daten im Interpolationstakt und die Möglichkeit der Beeinflussung einer Roboterbewegung an programmierten Punkten, sowie während des Bahnverfahrens, handeln, oder um eine XML-Schnittstelle der Robotersteuerung, die Zugriff auf Laufzeitdaten der Robotersteuerung und eine Beeinflussung der Roboterbewegung an programmierten Punkten ermöglicht, oder einen .Net-Client, wie zum Beispiel Windows Store (WinRT), WPF oder Silverlight etc., in einer Windows-Umgebung der Robotersteuerung, der Zugriff auf Laufzeitdaten der Robotersteuerung über eine virtuelle Netzwerkverbindung zum Echtzeitkern der Steuerung bietet, wodurch eine Beeinflussung der Roboterbewegung an programmierten Punkten möglich ist. Alternativ kann ein Roboter Reference Interface Zugriff auf Daten im Interpolationsakt bieten und die Beeinflussung einer Roboterbewegung an programmierten Punkten ermöglichen. Dabei kann eine Option Extended Guided Motion die Beeinflussung einer Roboterbewegung an programmierten Punkten, sowie während des Bahnverfahrens ermöglichen. Ein PC-Interface kann Zugriff auf Laufzeitdaten der Robotersteuerung ermöglichen. Dadurch ist eine Beeinflussung der Roboterbewegung an programmierten Punkten möglich. Bei einem anderen Roboter bieten ein User Socket Messaging und/oder ein PC SDK (software development kit) Zugriff auf Laufzeitdaten der Robotersteuerung. Dies ermöglicht eine Beeinflussung der Roboterbewegung an programmierbaren Punkten. Während der Bahnbewegung muss die Beeinflussung über Dynamic Path Modifier erfolgen. Bei einem weiteren Robotersystem bietet eine native XML-Schnittstelle Zugriff auf Laufzeitdaten der Robotersteuerung und ermöglicht eine Beeinflussung der Roboterbewegung an programmierten Punkten. Über die Sensor-Funktion ist die Beeinflussung während einer Roboterbewegung möglich. Bussysteme (Profibus, Profinet, Ethercat, ...) bieten roboterunabhängig Zugriff auf die Robotersteuerung, eine Beeinflussung der Roboterbewegung ist dadurch an programmierten Punkten möglich.

Das Programm kann mittels textueller Programmierung oder CAD gestützter Programmierung erstellt werden und bevorzugt auch während des Betriebs der Anlage modifiziert werden, ohne dass dabei die theoretische Definition der Montageaufgabe verändert wird.

Eine erste Inbetriebnahme der Anlage kann mittels des Rechners automatisch erfolgen. Die Inbetriebnahme wird durch die Nutzung der Messtechnik automatisiert und rückfahrbar dokumentiert. Dies vereinfacht die Inbetriebnahme der Anlage und erlaubt die Separierung von Maschinen- und Prozessfehlern.

Der wenigstens eine Roboter und das wenigstens eine Messsystem bilden ein Netzwerk von miteinander kommunizierenden Einzelsystemen, mit denen autonome Teilaspekte der realen Montageaufgabe und im Zusammenspiel aller Teilaspekte die reale Montageaufgabe optimal im Sinne der theoretisch definierten Montageaufgabe durchgeführt werden können.

Es werden jetzt Ausführungsbeispiele der Erfindung anhand von Figuren erläutert. Die Figuren betreffen ausgewählte Beispiele von Anlagen. Erfindungswesentliche Merkmale, die nur den Figuren entnommen werden können, gehören zum Umfang der Offenbarung und können alleine oder in gezeigten Kombinationen den Gegenstand der Anmeldung vorteilhaft weiterbilden. Die Figuren zeigen im Einzelnen:
- Figur 1:: Anlage mit zwei Robotern
- Figur 2:: Anlage mit sechs Robotern

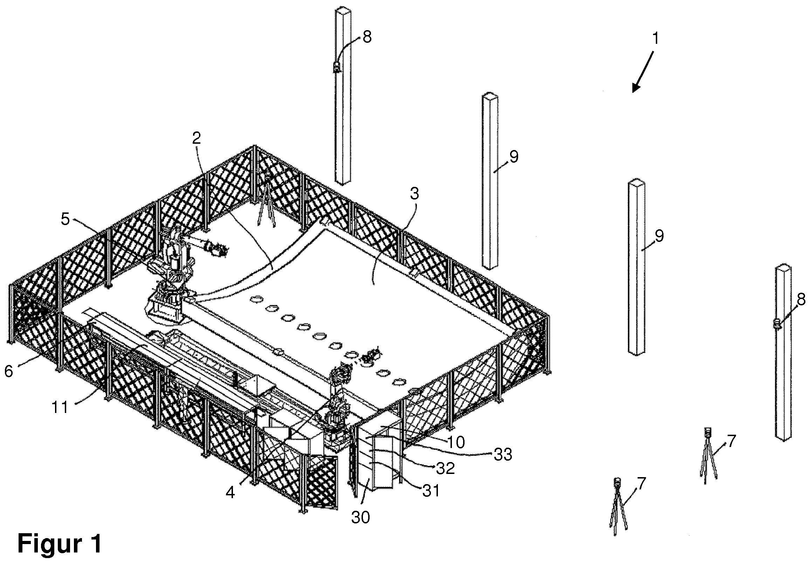

Die Figur 1 zeigt eine Anlage 1 mit einem Werkzeug 2, auf dem ein großflächiges Bauteil 3, hier ein Teil einer Flugzeughülle, liegt, zwei Robotern 4, 5 und einer Ablage 6. Des Weiteren umfasst die Anlage 1 ein Messsystem, das aus den Messsystemen 7, 8 und 9 besteht, und einen Rechner 10.

Bei dem Bauteil 3 handelt es sich um das Teil einer Außenhaut eines Flugzeugrumpfs, die mit Spanten oder Stringern 11 verstärkt werden soll. Ein erster Spant 11, der durch nicht gezeigte weitere Roboter auf der Ablage 6 abgelegt wurde, kann durch die Roboter 4, 5 gegriffen und auf dem Bauteil 3 abgelegt werden. Diese Ablage oder Positionierung auf dem Bauteil 3 muss mit absoluter Genauigkeit erfolgen.

Damit dies möglich ist, umfasst die Anlage 1 mehrere Messsysteme 7, 8, 9 die die Bewegungen, das heißt, eine Richtung der Bewegung, eine Geschwindigkeit der

Bewegung und eine in der Bewegung zurückgelegte Strecke, ein Drehmoment, eine Druckkraft und andere Parameter der Roboter überwachen. Die Messsysteme 7, 8, 9 können zum Beispiel Theodolite, Kameras, Lasertracker und/oder Laserradar umfassen, um die einzelnen Arbeitsschritte der miteinander kollaborierenden Roboter im Detail zu überwachen.

Die Montageaufgabe wird an einem nicht gezeigten Arbeitsplatz theoretisch zum Beispiel mit einem CAD-Programm oder textueller Programmierung erstellt. Das fertige Programm wird dann in eine Speichereinheit 31 des Rechners 10 eingelesen und umfasst die theoretischen Soll-Daten zum Abarbeiten aller einzelner Arbeitsschritte zum Erfüllen der Montageaufgabe.

Der Rechner 10 umfasst eine Recheneinheit 30. Die Recheneinheit 30 kann die Speichereinheit 31, eine Übertragungsschnittstelle 32 und eine Kommunikationsschnittstelle 33 umfassen. Die Recheneinheit 30 leitet aus dem in der Speichereinheit 31 hinterlegten Programm für die theoretisch definierte Montageaufgabe Unterprogramme für jeden der beiden miteinander kollaborierenden Roboter 4, 5 ab, die die einzelnen abgestimmten Arbeitsschritte des jeweiligen Roboters abbilden. Diese Unterprogramme werden über die Übertragungsstelle 32 an die beiden Roboter 4, 5 übertragen.

Die Montageaufgabe besteht zum Beispiel darin, dass die beiden Roboter 4, 5 den Stringer 11 von der Ablage 6 aufnehmen, den Stringer 11 absolut positionsgenau auf dem Bauteil 3 ablegen und bevorzugt mit dem Bauteil 3 verbinden. Dazu kann mit Hilfe der Messsysteme 7, 8, 9 und virtueller und/oder realer Agenten zum Beispiel ein virtuelles Koordinatensystem des Flugzeugs aufgespannt werden, in dem das Bauteil 3 absolut positionsgenau positioniert ist und folglich auch die Stringer 11 absolut positionsgenau auf dem Bauteil 3 abgelegt werden können.

Da alleine durch die Roboter 4, 5 aufgrund von Toleranzketten eine absolut positionsgenaue Montage der Stringer 11 auf dem Bauteil 3 nicht möglich ist, wird die Genauigkeit der Montage dadurch erreicht, dass die Messsysteme 7, 8, 9 alle Bewegungen der Roboter 4, 5 überwachen und die gewonnen Messergebnisse über die Kommunikationsschnittstelle 33 an den Rechner 10 senden. In der Recheneinheit 30 können diese gemessenen Ist-Daten der Roboterbewegung mit den vorgegebenen Soll-Daten des theoretisch erstellten Programms verglichen werden. Werden bei diesem Vergleich Abweichungen der Ist-Bewegung von der Soll-Bewegung festgestellt, kann das Programm Änderungen generieren, um zum Beispiel den gemessenen Ist-Wert durch Abänderung zum Beispiel eines Parameters der Roboterbewegung an den vorgegebenen Soll-Wert der theoretischen Programmierung automatisch anzupassen und/oder einen oder mehrere Arbeitsschritte der miteinander kollaborierenden Roboter 4, 5 automatisch zu optimieren.

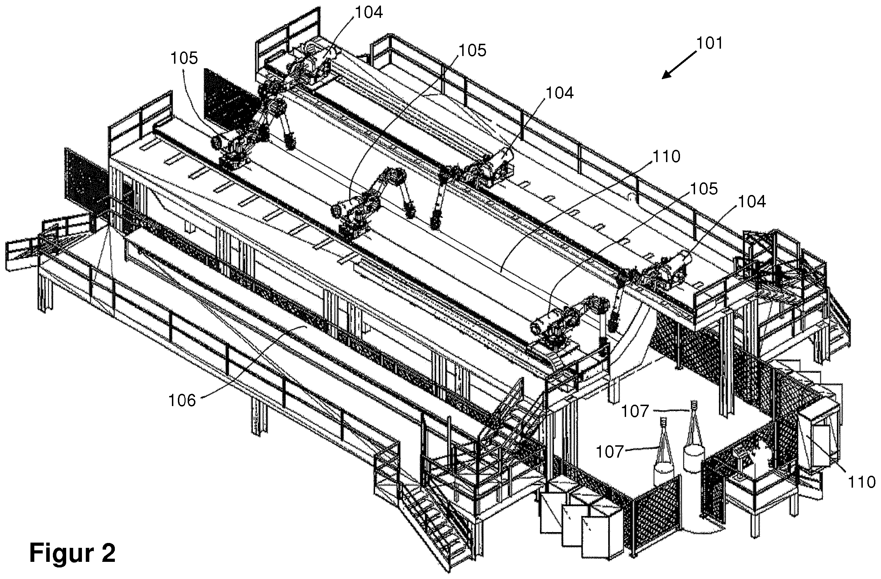

Die Figur 2 betrifft eine Anlage 101 mit sechs miteinander kollaborierenden Robotern 104, 105, die gemeinsam Stringer 111 auf einem Bauteil ablegen. Jeder der Roboter 104, 105 hat zum Beispiel sechs Freiheitsgrade. Auch in dieser Anlage 101 werden die Roboterbewegungen und weitere Parameter der Roboter 104, 105 von einem Messsystem oder mehreren Messsystemen überwacht. In der Figur 2 ist nur das Messsystem 107 dargestellt. Weitere Messsysteme können beispielsweise an einer nicht gezeigten Raumdecke und/oder einer nicht gezeigten Raumwand angebracht sein. Auch diese Anlage 101 umfasst einen Rechner 110, der dem Rechner 10 der Figur 1 entspricht und daher hier nicht nochmals beschrieben wird. Auch die Abarbeitung der Montageaufgabe entspricht der zur Figur 1 beschriebenen Montageaufgabe, nur dass die Kollaboration von sechs Robotern 104, 105 miteinander und das Überwachen der Parameter aller sechs Roboter 104, 105 komplexer ist als bei nur zwei miteinander kollaborierenden Robotern 4, 5.

Statt der in der Figur 1 gezeigten zwei Roboter 4, 5 oder der in Figur 2 gezeigten sechs Roboter 104, 105 kann jede andere sinnvolle Anzahl von Robotern, beispielsweise auch nur ein einziger Roboter, zusammen mit einem Messsystem, das aus einem einzigen Messsystem (Figur 2) oder aus mehreren Messsystemen (Figur 1) besteht, aufgabenspezifisch ausgewählt werden.

### Bezugszeichenliste:

- 1, 101: Anlage
- 2: Werkzeug
- 3: Bauteil
- 4, 104: Roboter
- 5, 105: Roboter
- 6, 106: Ablage
- 7, 107: Messsystem
- 8: Messsystem
- 9: Messsystem
- 10, 110: Rechner
- 11, 111: Stringer
- 30: Recheneinheit
- 31: Speichereinheit
- 32: Übertragungsschnittstelle
- 33: Kommunikationsschnittstelle

## Patentansprüche

1. Verfahren zur Erstinbetriebnahme einer Anlage (1) mit wenigstens einem Roboter (4, 5) und wenigstens einem Messsystem (7, 8, 9) für eine durch theoretisch definierte Schritte bestimmte Montageaufgabe, wobei
i. in einem ersten Schritt ein Programm zur Abarbeitung der Montageaufgabe an einem Rechner, der nicht mit der Anlage (1) verbunden ist, erstellt wird,
ii. in einem zweiten Schritt das Programm mit den theoretisch definierten Schritten für die Montageaufgabe in eine Speichereinheit (31) eines mit dem Roboter (4, 5) und dem Messsystem (7, 8, 9) verbundenen Rechners (10) eingelesen wird,
iii. in einem dritten Schritt von einer Recheneinheit (30) des mit dem Roboter (4, 5) und dem Messystem (7, 8, 9) verbundenen Rechners (10) aus dem Programm aufeinander abgestimmte individuelle Arbeitsschritte zur Abarbeitung der Montageaufgabe für den Roboter (4, 5) abgeleitet werden,
iv. in einem vierten Schritt die Arbeitsschritte von dem Rechner (10) an den Roboter (4, 5) übermittelt werden
v. in einem fünften Schritt der Roboter (4, 5) gesteuert durch das Programm einen Arbeitsschritt der Montageaufgabe nach dem anderen durchführt, wobei das Messsystem (7, 8, 9) jeden der Arbeitsschritte des Roboters (4, 5) überwacht und Messdaten für jeden Arbeitsschritt der Montageaufgabe an den Rechner (10) sendet,
vi. in einem sechsten Schritt die erfassten Messdaten für jeden Arbeitsschritt der Montageaufgabe in dem Rechner (10) gespeichert und mit den in der Speichereinheit (31) abgelegten Daten der theoretisch definierten Schritte der Montageaufgabe verglichen werden,
vii. in einem siebenten Schritt aufgrund der vom Messsystem (7, 8, 9) erfassten Messdaten das Programm für die Montageaufgabe von der Recheneinheit (10) optimiert und als optimiertes Programm abgespeichert wird, und
viii. in einem achten Schritt von der Recheneinheit (30) aus dem optimierten Programm optimierte Arbeitsschritte abgeleitet und für die nächste, gleiche Montageaufgabe an den Roboter übermittelt werden.

2. Verfahren nach Anspruch 1, mit wenigstens einem zweiten Roboter (104, 105) der mit dem wenigstens einen Roboter (104, 105) für die Montageaufgabe kollaboriert, wobei
▪ das Programm mit den theoretisch definierten Schritten für die Montageaufgabe in eine Speichereinheit (31) eines mit den zwei miteinander kollaborierenden Robotern (104, 105) und dem Messsystem (7, 8, 9) verbundenen Rechners (110) eingelesen wird,
▪ von einer Recheneinheit (30) des Rechners (110) aus dem Programm Unterprogramme zum Abarbeiten aufeinander abgestimmter individueller Arbeitsschritte der Montageaufgabe für die Roboter (104, 105) abgeleitet werden,
▪ die Unterprogramme an die Roboter (104, 105) übermittelt und bevorzugt in einer robotereigenen Speichereinheit abgelegt werden,
▪ die Roboter (104, 105) gesteuert durch die Unterprogramme einen Arbeitsschritt nach dem anderen durchführen und das Messsystem (7, 8, 9; 107) jeden der Arbeitsschritte jedes Roboters (104, 105) überwacht und die Messdaten für jeden Arbeitsschritt an den Rechner (110) sendet,
▪ die erfassten Messdaten für jeden Arbeitsschritt jedes Roboters (104, 105) in dem Rechner (110) gespeichert und von der Recheneinheit (30) mit den in der Speichereinheit (31) abgelegten Daten der theoretisch definierten Schritte der Montageaufgabe verglichen werden, und
▪ aufgrund der vom Messsystem (7, 8, 9; 107) erfassten Messdaten das Programm für die Montageaufgabe der Roboter (104, 105) von der Recheneinheit (110) optimiert und als optimiertes Programm abgespeichert wird, und aus dem optimierten Programm optimierte Unterprogramme abgeleitet und für die nächste, gleiche Montage an die Roboter (104, 105) übermittelt werden.

3. Verfahren nach einem der vorhergehenden Ansprüche, wobei bei der Definition der theoretischen Schritte virtuelle Agenten zum Einsatz kommen, mit denen die vom Messsystem (7, 8, 9; 107) gemessenen Daten mit den theoretischen Programmdaten abgeglichen werden, wobei von den virtuellen Agenten detektierte Abweichungen zwischen den durch die Agenten repräsentierten Daten und den Messdaten von dem Rechner (10; 110) erfasst und abgespeichert werden.

4. Verfahren nach einem der vorgehenden Ansprüche, wobei von dem Roboter (4, 5) respektive den Robotern (104, 105) und dem Messsystem (7, 8, 9; 107) ein Netzwerk von miteinander kommunizierenden Einzelsystemen gebildet wird, mit dem autonome Teilaspekte der realen Montageaufgabe und im Zusammenspiel aller Teilaspekte die gesamte reale Montageaufgabe optimal im Sinne der theoretisch definierten Montageaufgabe gelöst werden.

5. Verfahren nach einem der vorgehenden Ansprüche, wobei mit dem Verfahren Maschinenfehler und Prozessfehler bei der Erstinbetriebnahme der Montageanlage und während der folgenden Produktion, separat ermittelt und nachvollziehbar abgespeichert und damit dokumentiert werden.

6. Verfahren nach einem der vorgehenden Ansprüche, wobei mit dem Verfahren Spanten mit einer großflächigen, nachgiebigen Struktur verbunden werden, wobei die Struktur bevorzugt ein Teil eines großvolumigen Bauteils ist.

7. Verfahren nach dem vorgehenden Anspruch, wobei es sich bei dem Bauteil um einen Flugzeugrumpf, bei der Struktur um einen Teil einer Flugzeugaußenhaut und bei dem Spant um einen sogenannten Stringer (11; 111) handelt.

8. Anlage zur Durchführung eines absoluten robotergestützten Positionierungsverfahrens, wobei die Anlage (1) umfasst:
a. ein Programm zur Abarbeitung einer Montageaufgabe,
b. wenigstens einen Roboter (4, 5), der die Montageaufgabe gemäß dem Verfahrensschritt (v) des Anspruchs 1 durchführt,
c. wenigstens ein Messsystem (7, 8, 9), das die Parameter des Roboters (4, 5) gemäß dem Verfahrensschritt (v) des Anspruchs 1 überwacht, und
d. wenigstens einen Rechner (10),
e. wobei der Rechner (10) wenigstens eine Speichereinheit (31), eine Recheneinheit (30), eine Übertragungsschnittstelle (32) und eine Kommunikationsschnittstelle (33) umfasst und hergerichtet ist, die Verfahrensschritte (ii) bis (iv) und (vi) bis (viii) gemäß Anspruch 1 durchzuführen und
die erfassten Messdaten mit den in der Speichereinheit (31) abgelegten Daten der theoretisch definierten Schritte der Montageaufgabe zu vergleichen und bei eventuellen Abweichungen über einem vorgegebenen Grenzwert zu entscheiden, ob die Montageaufgabe sofort oder zu einem späteren Zeitpunkt abgebrochen oder gestoppt wird.

9. Anlage nach Anspruch 8, mit
a. wenigstens einem weiteren Roboter (104, 105) der zusammen mit dem wenigstens einen Roboter (104, 105) die Montageaufgabe durchführt,
b. wobei das Messsystem (7, 8, 9; 107 die Parameter der zwei Roboter (104, 105) überwacht, und
c. wobei der Rechner (110) ferner hergerichtet ist
d. aus dem Programm mittels der Recheneinheit (30) mit einem vorgegebenen Algorithmus Unterprogramme abzuleiten, wobei jedes der Unterprogramme aufeinander abgestimmte Arbeitsschritte für genau einen der Roboter (104, 105) betrifft,
e. die Unterprogramme über die Übertragungsschnittstelle an die Roboter (104, 105) zu übertragen,
f. über die Kommunikationsschnittstelle die wenigstens zwei Roboter (104, 105), das Messsystem (7, 8, 9; 107) und Sensoren zu überwachen, um die Montageaufgabe abzuarbeiten,
g. bevorzugt über die Kommunikationsschnittstelle (33) Messdaten des Messsystems (7, 8, 9; 107) zu empfangen und für Dokumentationszwecke abzuspeichern, und
h. diese erfassten Messdaten mit den in der Speichereinheit (31) abgelegten Daten der theoretisch definierten Schritte der Montageaufgabe in den Unterprogrammen für den jeweiligen Roboter (104, 105) zu vergleichen und bei eventuellen Abweichungen über einem vorgegebenen Grenzwert zu entscheiden, ob die Montageaufgabe sofort oder zu einem späteren Zeitpunkt abgebrochen oder gestoppt wird.

10. Anlage nach Anspruch 8 oder Anspruch 9, wobei der Rechner (10; 110) weiterhin hergerichtet ist, aus den detektierten Abweichungen neue Soll-Werte für die Unterprogramme zu bestimmen und diese in die Unterprogramme zu integrieren und bevorzugt die Daten für jeden abgeleiteten Arbeitsschritt des Programms/der Unterprogramme gesondert speichert, so dass später nachvollziehbar ist, welcher Arbeitsschritt im Programm/Unterprogramm wann und wie modifiziert wurde.

11. Anlage nach einem der vorgehenden drei Ansprüche, wobei bei der Erstellung des Programms virtuelle Agenten an bestimmten verfahrenskritischen Stellen definiert werden, so dass die Recheneinheit (30) speziell diese Agenten mit den Ergebnissen des Messsystems (7, 8, 9; 107) vergleichen kann, wobei es sich bei den Agenten bevorzugt um Hilfsmittel zur Erfüllung einer oder mehrerer der Aufgaben, insbesondere Synchronisierungsaufgaben, aus Kalibrierung, Regelung, Überwachung und Prozessteuerung, Dokumentation, Statusverwaltung und Konfiguration handelt.

12. Anlage nach einem der vorgehenden vier Ansprüche, wobei in der Anlage (1; 101) zur Überwachung zum Beispiel der Roboterbewegungen eines oder mehrere Messsysteme (7, 8, 9; 107) implementiert sind, die Messungen mittels Rotationstheodoliten oder Indoor GPS, einer Mehrzahl von Kameras zur Beobachtung von Markern, Lasertrackern ohne oder mit Orientierungsempfängern, Laserradar oder andere geeigneten Messmethoden durchführen.

13. Anlage nach einem der vorgehenden fünf Ansprüche, wobei die Roboter (4, 5; 104, 105) eine oder mehrere Schnittstellen umfassen, und über die Schnittstellen Änderungen der Roboterbewegungen mittels des Rechners (10; 110) veranlassbar sind.

14. Anlage nach einem der vorgehenden sechs Ansprüche, wobei das Programm mittels textueller Programmierung und/oder CAD gestützter Programmierung erstellt wird und bevorzugt auch während des Betriebs der Anlage (1; 101) modifiziert werden kann, ohne die theoretische Definition der Montageaufgabe zu verändern.

15. Anlage nach einem der vorgehenden sieben Ansprüche, wobei eine erste Inbetriebnahme der Anlage (1; 101) mittels des Rechners (10; 110) automatisch erfolgt.

16. Anlage nach einem der vorgehenden acht Ansprüche, wobei der Roboter (4, 5) oder die wenigstens zwei Roboter (104, 105) und das wenigstens eine Messsystem (7, 8, 9; 107) ein Netzwerk von miteinander kommunizierenden Einzelsystemen bilden, mit denen autonome Teilaspekte der realen Montageaufgabe und im Zusammenspiel aller Teilaspekte die reale Montageaufgabe optimal im Sinne der theoretisch definierten Montageaufgabe durchführbar sind.

## Claims

1. A method for initialising, for the first time, a facility (1) comprising at least one robot (4, 5) and at least one measurement system (7, 8, 9) for an assembly task which is determined by theoretically defined steps, wherein:
i. in a first step, a program for executing the assembly task is created on a computer which is not connected to the facility (1);
ii. in a second step, the program comprising the theoretically defined steps for the assembly task is inputted into a memory unit (31) of a computer (10) which is connected to the robot (4, 5) and the measurement system (7, 8, 9);
iii. in a third step, mutually adjusted individual processing steps for executing the assembly task are derived from the program by a computational unit (30) of the computer (10) which is connected to the robot (4, 5) and the measurement system (7, 8, 9), for the robot (4, 5);
iv. in a fourth step, the processing steps are transmitted from the computer (10) to the robot (4, 5);
v. in a fifth step, the robot (4, 5) performs one processing step of the assembly task at a time, under the control of the program, and the measurement system (7, 8, 9) monitors each of the processing steps performed by the robot (4, 5) and transmits measurement data for each processing step of the assembly task to the computer (10);
vi. in a sixth step, the captured measurement data for each processing step of the assembly task are stored in the computer (10) and compared with the data, stored in the memory unit (31), of the theoretically defined steps of the assembly task;
vii. in a seventh step, the program for the assembly task is optimised by the computational unit (30) on the basis of the measurement data captured by the measurement system (7, 8, 9), and stored as an optimised program; and
viii. in an eighth step, optimised processing steps are derived from the optimised program by the computational unit (10) and transmitted to the robot for the next identical assembly task.

2. The method according to claim 1, comprising at least one second robot (104, 105) which collaborates with the at least one robot (104, 105) for the assembly task, wherein:
▪ the program comprising the theoretically defined steps for the assembly task is inputted into a memory unit (31) of a computer (110) which is connected to the two mutually collaborating robots (104, 105) and the measurement system (7, 8, 9);
▪ subroutines for executing mutually adjusted individual processing steps of the assembly task are derived from the program by a computational unit (30) of the computer (110), for the robots (104, 105);
▪ the subroutines are transmitted to the robots (104, 105) and preferably stored in a memory unit specific to the robot(s);
▪ the robots (104, 105) perform one processing step at a time, under the control of the subroutines, and the measurement system (7, 8, 9; 107) monitors each of the processing steps performed by each robot (104, 105) and transmits the measurement data for each processing step to the computer (110);
▪ the captured measurement data for each processing step performed by each robot (104, 105) are stored in the computer (110) and compared by the computational unit (30) with the data, stored in the memory unit (31), of the theoretically defined steps of the assembly task; and
▪ the program for the assembly task performed by the robots (104, 105) is optimised by the computational unit (30) on the basis of the measurement data captured by the measurement system (7, 8, 9; 107) and is stored as an optimised program, and optimised subroutines are derived from the optimised program and transmitted to the robots (104, 105) for the next identical assembly task.

3. The method according to any one of the preceding claims, wherein when defining the theoretical steps, virtual operatives are used which calibrate the data measured by the measurement system (7, 8, 9; 107) to the theoretical program data, wherein deviations, detected by the virtual operatives, between the data represented by the operatives and the measurement data are captured and stored by the computer (10; 110).

4. The method according to any one of the preceding claims, wherein the robot or robots (104, 105) and the measurement system (7, 8, 9; 107) form a network of individual systems which communicate with each other, using which autonomous partial aspects of the actual assembly task - and, when all the partial aspects interact, the actual assembly task as a whole - are solved optimally within the meaning of the theoretically defined assembly task.

5. The method according to any one of the preceding claims, wherein machine errors and process errors when initialising the assembly facility for the first time and during the following production are separately ascertained and reconstructibly stored and therefore documented using the method.

6. The method according to any one of the preceding claims, wherein ribs are connected to a large-area flexible structure using the method, wherein the structure is preferably a part of a large-volume sub-assembly.

7. The method according to the preceding claim, wherein the sub-assembly is an aircraft fuselage, the structure is a part of the outer shell of an aircraft, and the rib is a so-called stringer (11; 111).

8. A facility for performing an absolute robot-assisted positioning method, wherein the facility (1) comprises:
a. a program for executing an assembly task;
b. at least one robot (4, 5) which performs the assembly task in accordance with method step (v) in claim 1;
c. at least one measurement system (7, 8, 9) which monitors the parameters of the robot (4, 5) in accordance with method step (v) in claim 1; and
d. at least one computer (10),
e. wherein the computer (10) comprises at least a memory unit (31), a computational unit (30), a transmission interface (32) and a communications interface (33) and is designed to perform method steps (ii) to (iv) and (vi) to (viii) in accordance with claim 1, and
to compare the captured measurement data with the data, stored in the memory unit (31), of the theoretically defined steps of the assembly task and, if there are any deviations above a predetermined threshold value, to decide whether to discontinue or halt the assembly task immediately or at a later time.

9. The facility according to claim 8, comprising
a. at least one other robot (104, 105) which performs the assembly task together with the at least one robot (104, 105),
b. wherein the measurement system (7, 8, 9; 107) monitors the parameters of the two robots (104, 105), and
c. wherein the computer (110) is also designed to
d. derive subroutines from the program by means of the computational unit (30) using a predetermined algorithm, wherein each of the subroutines relates to mutually adjusted processing steps for exactly one of the robots (104, 105),
e. transmit the subroutines to the robots (104, 105) via the transmission interface,
f. monitor the at least two robots (104, 105), the measurement system (7, 8, 9; 107) and sensors via the communications interface in order to execute the assembly task,
g. preferably receive measurement data of the measurement system (7, 8, 9; 107) via the communications interface (33) and store them for documentation purposes, and
h. compare said captured measurement data with the data, stored in the memory unit (31), of the theoretically defined steps of the assembly task in the subroutines for the respective robot (104, 105) and, if there are any deviations above a predetermined threshold value, decide whether to discontinue or halt the assembly task immediately or at a later time.

10. The facility according to claim 8 or claim 9, wherein the computer (10; 110) is also designed to determine new nominal values for the subroutines from the detected deviations and to integrate them into the subroutines and preferably stores the data for each derived processing step of the program/subroutines separately, such that it is possible to subsequently reconstruct when and how a processing step in the program/subroutine has been modified.

11. The facility according to any one of the preceding three claims, wherein when creating the program, virtual operatives are defined at particular points which are critical to the method, such that the computational unit (30) can specifically compare these operatives with the results of the measurement system (7, 8, 9; 107), wherein the operatives are preferably expedients for fulfilling one or more of the tasks, in particular synchronisation tasks, of calibrating, regulating, monitoring and process control, documentation, status management and configuration.

12. The facility according to any one of the preceding four claims, wherein in order to monitor for example the robot movements, one or more measurement systems (7, 8, 9; 107) are implemented in the facility (1; 101) which take measurements by means of rotary theodolites or indoor GPS, a multitude of cameras for observing markers, laser trackers with or without orientation receivers, laser radar or other suitable measuring methods.

13. The facility according to any one of the preceding five claims, wherein the robots (4, 5; 104, 105) comprise one or more interfaces, and changes to the robot movements can be made by means of the computer (10; 110) via the interfaces.

14. The facility according to any one of the preceding six claims, wherein the program is created by means of textual and/or CAD-assisted programming and can preferably be modified even while the facility (1; 101) is in operation, without altering the theoretical definition of the assembly task.

15. The facility according to any one of the preceding seven claims, wherein the facility (1; 101) is initialised for the first time automatically by means of the computer (10; 110).

16. The facility according to any one of the preceding eight claims, wherein the robot (4, 5) or the at least two robots (104, 105) and the at least one measurement system (7, 8, 9; 107) form a network of individual systems which communicate with each other and using which autonomous partial aspects of the actual assembly task - and, when all the partial aspects interact, the actual assembly task - can be performed optimally within the meaning of the theoretically defined assembly task.

## Revendications

1. Procédé pour la première mise en service d'une installation (1) comprenant au moins un robot (4, 5) et au moins un système de mesure (7, 8, 9) pour une tâche d'assemblage spécifiée par des étapes théoriquement définies, dans lequel :
i. dans une première étape, un programme pour exécuter la tâche d'assemblage est créé sur un ordinateur qui n'est pas relié à l'installation (1) ;
ii. dans une deuxième étape, le programme comprenant les étapes théoriquement définies pour la tâche d'assemblage est entré dans une unité de mémoire (31) d'un ordinateur (10) relié au robot (4, 5) et au système de mesure (7, 8, 9) ;
iii. dans une troisième étape, des étapes de travail individuelles concordées pour exécuter la tâche d'assemblage sont dérivées pour le robot (4, 5) à partir du programme par une unité de calcul (30) de l'ordinateur (10) relié au robot (4, 5) et au système de mesure (7, 8, 9) ;
iv. dans une quatrième étape, les étapes de travail sont transmises au robot (4, 5) par l'ordinateur (10) ;
v. dans une cinquième étape, le robot (4, 5) exécute les étapes de travail de la tâche d'assemblage l'une après l'autre sous la commande du programme, le système de mesure (7, 8, 9) surveillant chacune des étapes de travail du robot (4, 5) et envoyant des données de mesure pour chaque étape de travail de la tâche d'assemblage à l'ordinateur (10) ;
vi. dans une sixième étape, les données de mesure acquises pour chaque étape de travail de la tâche d'assemblage sont stockées dans l'ordinateur (10) et comparées avec les données, stockées dans l'unité de mémoire (31), des étapes théoriquement définies de la tâche d'assemblage ;
vii. dans une septième étape, le programme pour la tâche d'assemblage est optimisé par l'unité de calcul (30) sur la base des données de mesure acquises par le système de mesure (7, 8, 9) et stocké en tant que programme optimisé ; et
viii. dans une huitième étape, des étapes de travail optimisées sont dérivées à partir du programme optimisé par l'unité de calcul (30) et transmises au robot pour la prochaine tâche d'assemblage identique.

2. Procédé selon la revendication 1, comprenant au moins un deuxième robot (104, 105) qui collabore avec ledit au moins un robot (104, 105) pour la tâche d'assemblage, dans lequel
▪ le programme comprenant les étapes théoriquement définies pour la tâche d'assemblage est entré dans une unité de mémoire (31) d'un ordinateur (110) relié aux deux robots collaborant (4, 5) et au système de mesure (7, 8, 9) ;
▪ des sous-programmes pour exécuter des étapes de travail individuelles concordées de la tâche d'assemblage sont dérivés pour les robots (104, 105) à partir du programme par une unité de calcul (30) de l'ordinateur (10) ;
▪ les sous-programmes sont transmis aux robots (104, 105) et de préférence stockés dans une unité de mémoire propre au robot,
▪ les robots (104, 105) exécutent les étapes de travail l'une après l'autre sous la commande des sous-programmes, et le système de mesure (7, 8, 9; 107) surveille chacune des étapes de travail de chaque robot (104, 105) et envoie les données de mesure pour chaque étape de travail à l'ordinateur (110) ;
▪ les données de mesure acquises pour chaque étape de travail de chaque robot (104, 105) sont stockées dans l'ordinateur (110) et comparées avec les données, stockées dans l'unité de mémoire (31), des étapes théoriquement définies de la tâche d'assemblage ; et
▪ le programme pour la tâche d'assemblage des robots (104, 105) est optimisé par l'unité de calcul (30) sur la base des données de mesure acquises par le système de mesure (7, 8, 9; 107) et stocké en tant que programme optimisé, et des sous-programmes optimisés sont dérivés à partir du programme optimisé et transmis aux robots (104, 105) pour la prochaine tâche d'assemblage identique.

3. Procédé selon l'une quelconque des revendications précédentes, dans lequel lors de la définition des étapes théoriques, on utilise des agents virtuels qui alignent les données mesurées par le système de mesure (7, 8, 9; 107) avec les données de programme théoriques, où des écarts, détectés par les agents virtuels, entre les données représentées par les agents et les données de mesure sont acquis et stockés par l'ordinateur (10; 110).

4. Procédé selon l'une quelconque des revendications précédentes, dans lequel le robot (4, 5) ou les robots (104, 105) et le système de mesure (7, 8, 9; 107) forment un réseau de systèmes individuels communiquant entre eux, qui peut résoudre de manière optimale des aspects partiels autonomes de la tâche d'assemblage réelle et, lors de l'interaction de tous les aspects partiels, toute la tâche d'assemblage réelle en termes de la tâche d'assemblage théoriquement définie.

5. Procédé selon l'une quelconque des précédentes revendications, dans lequel lors de la première mise en service de l'installation d'assemblage et pendant la production ultérieure, des erreurs mécaniques et des erreurs de processus sont séparément déterminés et stockés de manière traçable et donc documentés en utilisant le procédé.

6. Procédé selon l'une quelconque des revendications précédentes, dans lequel des couples sont reliés à une structure flexible de grande surface en utilisant le procédé, la structure étant de préférence une partie d'un composant de grand volume.

7. Procédé selon la revendication précédente, dans lequel le composant est un fuselage d'aéronef, la structure est une partie d'un revêtement d'aéronef, et le couple est une « lisse » (11; 111).

8. Installation pour exécuter un procédé de positionnement absolu robotisé, l'installation (1) comprenant :
a. un programme pour exécuter une tâche d'assemblage ;
b. au moins un robot (4, 5) qui exécute la tâche d'assemblage selon l'étape de procédé (v) de la revendication 1 ;
c. au moins un système de mesure (7, 8, 9) qui surveille les paramètres du robot (4, 5) selon l'étape de procédé (v) de la revendication 1 ; et
d. au moins un ordinateur (10),
e. l'ordinateur (10) comprenant au moins une unité de mémoire (31), une unité de calcul (30), une interface de transmission (32) et une interface de communication (33) et étant configuré pour exécuter les étapes de procédé (ii) à (iv) et (vi) à (viii) selon la revendication 1 et
pour comparer les données de mesure acquises avec les données, stockées dans l'unité de mémoire (31), des étapes théoriquement définies de la tâche d'assemblage, et pour décider, en cas d'écarts dépassant une valeur limite prédéterminée, si la tâche d'assemblage doit être abandonnée ou arrêtée immédiatement ou ultérieurement.

9. Installation selon la revendication 8, comprenant
a. au moins un autre robot (104, 105) qui exécute la tâche d'assemblage avec ledit au moins un robot (104, 105),
b. le système de mesure (7, 8, 9; 107) surveillant les paramètres des deux robots (104, 105), et
c. l'ordinateur (110) étant en outre configuré pour
d. dériver des sous-programmes à partir du programme au moyen d'une unité de calcul (30) en utilisant un algorithme prédéterminé, chacun des sous-programmes concernant des étapes de travail concordées pour exactement l'un des robots (104, 105),
e. transmettre les sous-programmes aux robots (104, 105) via l'interface de transmission,
f. surveiller lesdits au moins deux robots (104, 105), le système de mesure (7, 8, 9; 107) et des capteurs via l'interface de communication afin d'exécuter la tâche d'assemblage,
g. recevoir des données de mesure du système de mesure (7, 8, 9; 107) de préférence via l'interface de communication (33) et les stocker à des fins de documentation, et
h. comparer ces données de mesure acquises avec les données, stockées dans l'unité de mémoire (31), des étapes théoriquement définies de la tâche d'assemblage dans les sous-programmes pour le robot respectif (104, 105) et, en cas d'écarts dépassant une valeur limite prédéterminée, décider si la tâche d'assemblage doit être abandonnée ou arrêtée immédiatement ou ultérieurement.

10. Installation selon la revendication 8 ou la revendication 9, dans laquelle l'ordinateur (10; 110) est en outre configuré pour déterminer de nouvelles valeurs cibles pour les sous-programmes à partir des écarts détectés et pour les intégrer dans les sous-programmes, et stocke de préférence séparément les données pour chaque étape de travail dérivée du programme / des sous-programmes de sorte qu'il est ultérieurement traçable quelle étape de travail dans le programme/sous-programme a été modifiée à quel moment et de quelle façon.

11. Installation selon l'une quelconque des trois revendications précédentes, dans laquelle lors de la création du programme, des agents virtuels sont définis à certains points cruciales pour le procédé de sorte que l'unité de calcul (30) peut comparer spécifiquement ces agents avec les résultats du système de mesure (7, 8, 9; 107), les agents étant de préférence des aides pour accomplir une ou plusieurs des tâches, en particulier des tâches de synchronisation, parmi l'étalonnage, la régulation, la surveillance et la commande du procédé, la documentation, la gestion de l'état et la configuration.

12. Installation selon l'une quelconque des quatre revendications précédentes, dans laquelle un ou plusieurs systèmes de mesure (7, 8, 9; 107) sont mis en œuvre dans l'installation (1; 101), pour surveiller par exemple les mouvements de robot, et effectuent des mesures au moyen de théodolites rotatifs ou du GPS intérieur, de plusieurs caméras pour observer de marqueurs, de suiveurs laser avec ou sans récepteurs d'orientation, du radar laser ou d'autres méthodes de mesure appropriées.

13. Installation selon l'une quelconque des cinq revendications précédentes, dans laquelle les robots (4, 5; 104, 105) comprennent une ou plusieurs interfaces, et des changements des mouvements de robot peuvent être initiés au moyen de l'ordinateur (10; 110) via les interfaces.

14. Installation selon l'une quelconque des six revendications précédentes, dans laquelle le programme est créé au moyen de programmation textuelle et / ou de programmation basée sur la CAO et peut de préférence également être modifié pendant le fonctionnement de l'installation (1; 101) sans changer la définition théorique de la tâche d'assemblage.

15. Installation selon l'une quelconque des sept revendications précédentes, dans laquelle une première mise en service de l'installation (1; 101) est effectuée automatiquement au moyen de l'ordinateur (10; 110).

16. Installation selon l'une quelconque des huit revendications précédentes, dans laquelle ledit robot (4, 5) ou lesdits au moins deux robots (104, 105) et ledit au moins un système de mesure (7, 8, 9; 107) forment un réseau de systèmes individuels communiquant entre eux, qui peuvent exécuter de manière optimale des aspects partiels autonomes de la tâche d'assemblage réelle et, lors de l'interaction de tous les aspects partiels, toute la tâche d'assemblage réelle en termes de la tâche d'assemblage théoriquement définie.
